# EUROPEAN PATENT APPLICATION

(11) **EP 3 674 053 A1**
(43) Date of publication of application: **01.07.2020**
(21) Application number: 18867599.5
(22) Date of filing: 11.10.2018
(51) Int. Cl.: B29C 45/16

(54) **INJECTION MOLDED ARTICLE HAVING COLOR GRADATION AND PRODUCTION METHOD THEREOF**

(30) Priority: 18.10.2017 KR 20170135377
(71) Applicant: Lotte Chemical Corporation, Seoul, 05551 (KR)
(72) Inventor: CHAE, Soo Hyun, Uiwang-si Gyeonggi-do 16073 (KR); KYOUNG, Jun Hyouk, Uiwang-si Gyeonggi-do 16073 (KR); JU, Min Ji, Uiwang-si Gyeonggi-do 16073 (KR); CHAE, Eun Young, Uiwang-si Gyeonggi-do 16073 (KR)
(74) Representative: Michalski Hüttermann & Partner Patentanwälte mbB
(86) International application number: PCT/KR2018/011959
(87) International publication number: WO 2019/078540

(57) **Abstract**

An injection molded article of the present invention comprises: a first color resin part with one end having a first thickness, and the other end having a wedge shaped core layer of which the thickness becomes thinner; and a second color resin part with one end having a second thickness, and the other end having a surface layer surrounding the core layer, wherein the upper surface and the lower surface of the surface layer surrounding the core layer has a gradation due to the core layer thereinside. According to the injection molded article having color gradation, it is possible to adjust the size and location of a color gradation section, and it is easy to adjust the thickness.

## Description

### [Technical Field]

The present invention relates to an injection molded article having a color gradation and a method of manufacturing the same. More particularly, the present invention relates to an injection molded article having a color gradation, which allows adjustment of the size and starting position of a color gradation section and is easily adjustable in thickness, and a method of manufacturing the same.

### [Background Art]

Molded articles having a color gradation, that is, a gradual change in color tone or shade, are generally manufactured by a double injection molding process adapted to realize such a color gradation through two layers and thus are necessarily thick. In addition, since such a color gradation is implemented based on a mold, it is difficult to adjust the width of a gradation section.

In manufacture of a molded article having a color gradation, insert molding of a separate printing film or painting (spray painting) can considerably reduce the thickness of the molded article, as compared with double injection molding. However, these methods also require additional processes or costs, rather than being completed through a single injection molding process, as well as having problems of low recyclability of a molded article and low eco-friendliness.

Therefore, there is a need for an injection molded article having a color gradation, which allows adjustment of the size and starting position of a color gradation section, is freely adjustable in thickness, and is formed of a resin composition to be recyclable.

### [Disclosure]

### [Technical Problem]

It is one aspect of the present invention to provide an injection molded article which allows adjustment of the size and starting position of a gradation section in which different colors overlap each other to form a color gradation, and a method of manufacturing the same.

It is another aspect of the present invention to provide an injection molded article having a color gradation, which is easily adjustable in thickness and is recyclable, and a method of manufacturing the same.

The above and other aspects of the present invention will become apparent from the detailed description of the following embodiments.

### [Technical Solution]

One aspect of the present invention relates to an injection molded article. The injection molded article includes: a first color resin part having a first thickness at one end and formed at the other end with a wedge-shaped core layer; and a second color resin part having a second thickness at one end and formed at the other end with a shell layer surrounding the core layer, wherein the shell layer surrounding the core layer has a color gradation due to the core layer therein, when viewed from upper and lower surfaces thereof.

In one embodiment, the first color resin part and the second color resin part may be integrally formed with each other.

In one embodiment, the first color and the second color may be distinguishable from each other when viewing the core layer and the shell layer from side surfaces thereof.

In one embodiment, each of a first color resin forming the first color resin part and a second color resin forming the second color resin part may be formed of a thermoplastic resin composition having a transmittance of about 20% to about 99%, as measured on a 2.5 mm thick specimen in accordance with ASTM D1003.

In one embodiment, a difference in transmittance between the first color resin and the second color resin may be less than or equal to about 30%, as measured on 2.5 mm thick specimens in accordance with ASTM D1003.

In one embodiment, the first thickness may be the same as the second thickness.

In one embodiment, the first thickness may be different from the second thickness.

In one embodiment, the injection molded article may have a thickness of about 0.05 cm to about 10 cm.

Another aspect of the present invention relates to a method of manufacturing the injection molded article. The method includes simultaneously injecting a first color resin and a second color resin into a mold from opposite sides of the mold, respectively, wherein packing pressure applied to the first color resin is lower than packing pressure applied to the second color resin.

In one embodiment, the packing pressure applied to the first color resin may range from about 0 MPa to about 130 MPa, the packing pressure applied to the second color resin may range from about 10 MPa to about 140 MPa, and a difference in packing pressure between the first color resin and the second color resin may range from about 10 MPa to about 130 MPa.

In one embodiment, the first color resin and the second color resin may be injected at a rate of about 10 cc/sec to about 150 cc/sec.

In one embodiment, the first color resin and the second color resin may be injected at a temperature of about 180°C to about 350°C.

### [Advantageous Effects]

The present invention provides an injection molded article having a color gradation, which allows adjustment of the size and starting position of a gradation section in which different colors overlap each other to form a color gradation while being easily adjustable in thickness and recyclable.

### [Description of Drawings]

FIG. 1 is a perspective view of an injection molded article according to one embodiment of the present invention.
FIG. 2 is a sectional view of a mold according to one embodiment of the present invention.

### [Best Mode]

Reference will now be made in detail to various embodiments, examples of which are illustrated in the accompanying drawings. It should be understood that the present invention is not limited to the following embodiments and may be embodied in different ways. In addition, it should be understood that the embodiments are provided for complete disclosure and thorough understanding of the present invention and so as to fully convey the spirit of the present invention to those skilled in the art to which the present invention pertains. It should be noted that the drawings are not to precise scale and may be exaggerated in thickness of lines or size of components for descriptive convenience and clarity only. In addition, in the drawings, portions irrelevant to the description or apparent to those skilled in the art will be omitted for clarity. It should be understood that various modifications, changes, alterations, and equivalent embodiments can be made by those skilled in the art without departing from the spirit and scope of the invention. Throughout the specification, the drawings will be described from the observer's point of view. As used herein, terms such as "upper", "lower", "left", "right", "front", and "rear" are defined with reference to the accompanying drawings. Thus, it will be understood that the term "upper surface" can be used interchangeably with the term "lower surface". It should be understood that various modifications, changes, alterations, and equivalent embodiments can be made by those skilled in the art without departing from the spirit and scope of the invention. Like components will be denoted by like reference numerals throughout the specification.

Further, terms used herein shall be construed as follows: Although the terms "first", "second", and the like may be used herein to describe various elements, components, regions, layers and/or sections, these elements, components, regions, layers and/or sections should not be limited by these terms. These terms are only used to distinguish one element, component, region, layer or section from another element, component, region, layer or section.

As used herein, the singular forms "a", "an" and "the" are intended to include the plural forms as well, unless the context clearly indicates otherwise. It will be further understood that the terms "comprises" and/or "comprising," when used in this specification, specify the presence of stated features, steps, operations, elements, and/or components, but do not preclude the presence or addition of one or more other features, steps, operations, elements, components, and/or groups.

In addition, in carrying out a method or a manufacturing method, steps constituting the method may be performed differently from the stated order unless the context clearly indicates a specific order. That is, the steps may be performed in the same order as described, performed substantially at the same time, or performed in reverse order.

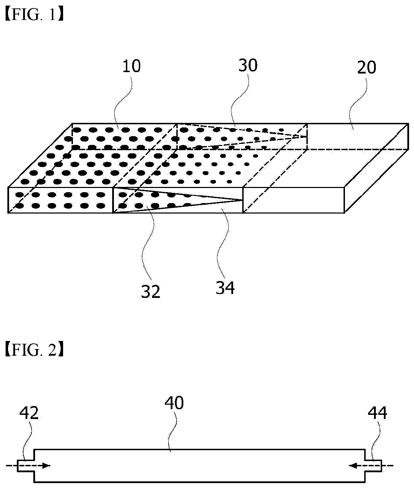

FIG. 1 is a perspective view of an injection molded article according to one embodiment of the present invention. Referring to FIG. 1, the injection molded article according to the present invention includes: a first color resin part 10 having a first thickness at one end and formed at the other end with a wedge-shaped core layer 32; and a second color resin part 20 having a second thickness at one end and formed at the other end with a shell layer 34 surrounding the core layer, wherein the core layer and the shell layer surrounding the core layer form a gradation section 30 in which different colors (a first color and a second color) overlap each other to create a color gradation, when viewed from upper and lower surfaces of the shell layer.

In some embodiments, a section in which the core layer 32 is surrounded by the shell layer 34, that is, the gradation section 30, may have a shape in which a first color resin forms the wedge-shaped core layer 32 gradually reduced in thickness from the first color resin part 10 toward the second color resin part 20 and a second color resin forms the shell layer 34 covering upper and lower surfaces of the core layer 32, when viewed from a side surface thereof (when viewed from front and rear surfaces thereof). In addition, the first color and the second color are distinguishable from each other when viewing the gradation section from the side surface of the shell layer. Further, the first color and the second color overlap each other to create the same color gradation when viewing the shell layer 34 surrounding the core layer 32 from the upper and lower surfaces of the shell layer.

In some embodiments, the first color resin part 10 and the second color resin part 20 may be formed of the first color resin and the second color resin having different colors, respectively. In addition, the first color resin part 10 and the second color resin part 20 may be integrally formed with each other. Herein, the expression "integrally formed" means that the first color resin part and the second color resin part are formed in one piece rather than coupled together through adhesives, fitting, or insertion.

In some embodiments, each of the first color resin and the second color resin may be formed of a thermoplastic resin composition including a thermoplastic resin and a colorant. That is, the injection molded article according to the present invention is formed of a thermoplastic resin composition and thus is recyclable.

In some embodiments, the thermoplastic resin may include any typical transparent thermoplastic resin, without limitation. For example, the thermoplastic resin may include a polycarbonate resin, a rubber-modified aromatic vinyl copolymer resin, an aromatic vinyl resin, a polyester resin, a polyamide resin, a polyolefin resin, and combinations thereof.

In some embodiments, the thermoplastic resin may have a weight average molecular weight of about 10,000 g/mol to about 300,000 g/mol, for example, about 10,000 g/mol to about 100,000 g/mol, as measured by gel permeation chromatography (GPC). Specifically, the thermoplastic resin may include a rubber-modified aromatic vinyl copolymer resin having a weight average molecular weight of about 10,000 g/mol to about 300,000 g/mol, a polycarbonate resin having a weight average molecular weight of about 10,000 g/mol to about 50,000 g/mol, and the like. Within this range of weight average molecular weight, the color gradation section can be formed in the injection molded article and the injection molded article can have good processability and mechanical properties.

In some embodiments, the colorant may include pigments and/or dyes of various colors which are used in typical thermoplastic resin compositions. For example, the colorant may include a reddish brown pigment such as iron oxide, a yellow pigment such as iron hydroxide, a green pigment such as chromium oxide, an ultramarine pigment such as sodium aluminosilicate, a white pigment such as titanium oxide, a black pigment such as carbon black, a pink pigment, and combinations thereof, without being limited thereto. The colorant may be present in an amount of about 0.001 to about 10 parts by weight, for example, about 0.01 to about 5 parts by weight, specifically about 0.1 to about 3 parts by weight, relative to about 100 parts by weight of the thermoplastic resin. Within this range, the color gradation section can be formed in the injection molded article.

In some embodiments, the thermoplastic resin composition may further include any typical additive, such as an impact modifier, a flame retardant, fillers, an antioxidant, a lubricant, a release agent, a nucleating agent, an antistatic agent, a stabilizer, and combinations thereof, without altering the desired effects of the present invention. In the thermoplastic resin composition, the additive may be present in an amount of about 0.0001 to about 50 parts by weight, for example, about 0.001 to about 10 parts by weight, relative to about 100 parts by weight of the thermoplastic resin.

In some embodiments, the thermoplastic resin composition may have a transmittance of about 20% to about 99%, for example, about 20% to about 90%, specifically about 50% to about 85%, as measured on a 2.5 mm thick specimen in accordance with ASTM D1003. Within this range, the color gradation section can be formed in the injection molded article.

In some embodiments, a transmittance difference between the first color resin and the second color resin may be less than or equal to about 30%, as measured on 2.5 mm thick specimens in accordance with ASTM D1003. Within this range, the color gradation section can be formed in the injection molded article.

In some embodiments, the first thickness may be the same as the second thickness.

In some embodiments, the first thickness may be different from the second thickness.

In some embodiments, the injection molded article may have a thickness of about 0.05 cm or more, for example, about 0.05 cm to about 10 cm, specifically about 0.08 cm to about 8 cm. Here, the thickness of the injection molded article can be easily adjusted to fall within this range.

The injection molded article according to the present invention may be manufactured by simultaneously injecting the first color resin and the second color resin into a mold from opposite sides of the mold, respectively. Here, packing pressure applied to the first color resin needs to be kept lower than that applied to the second color resin. In this way, the first color resin can form the wedge-shaped core layer 32 gradually reduced in thickness from the first color resin part 10 toward the second color resin part 20 and the second color resin can form the shell layer 34 covering the core layer 32, when viewing the injection molded article of FIG. 1 from the side thereof.

FIG. 2 is a sectional view of a mold according to one embodiment of the present invention. Specifically, the injection molded article may be manufactured by simultaneously injecting the first color resin and the second color resin through a first color resin inlet 40 and second color resin inlet 44 of the mold 40, respectively. Here, the inlets may be located on any of upper, lower, and side surfaces of the mold.

In some embodiments, the packing pressure applied to the first color resin may range from about 0 MPa to about 130 MPa, for example, about 0 MPa to about 80 MPa, and the packing pressure applied to the second color resin may range from about 10 MPa to about 140 MPa, for example, about 30 MPa to about 110 MPa. In addition, the packing pressure applied to the first color resin may be kept lower than that applied to the second color resin, and a difference in packing pressure between the first color resin and the second color resin may range from about 10 MPa to about 130 MPa, for example, about 30 MPa to about 120 MPa. When these requirements are satisfied, the color gradation section consisting of the core layer 32 formed of the first color resin and the shell layer 34 formed of the second color resin can be formed. In addition, the length (width) of the gradation section 30 between the first color resin part and the second color resin part depends on the difference in packing pressure. Specifically, the overlapping section between the first and second color resins, that is, the gradation section 30, may become wider with increasing difference in packing pressure between the first color resin and the second color resin.

In some embodiments, the first color resin and the second color resin may be injected at a rate of about 10 cc/sec to about 150 cc/sec, for example, about 40 cc/sec to about 100 cc/sec. Within this range, the first color resin part having the first thickness at one end and the second color resin part having the second thickness at one end can be formed. When there is a difference in injection rate between the first color resin and the second color resin, the difference in injection rate may range from about 5 cc/sec to about 90 cc/sec, for example, about 10 cc/sec to about 80 cc/sec. Within this range, the gradation section can be formed first (the starting point of the gradation section can be located) at a side where the injection rate is relatively low.

In some embodiments, the first color resin and the second color resin may be injected at a temperature of about 180°C to about 350°C, for example, about 200°C to about 300°C, although the injection temperature may be varied depending on the molecular weight and melt flow index of the thermoplastic resin. Within this range, the color gradation section of the injection molded article can be formed in a controlled manner.

The injection molded article according to the present invention may be manufactured by a one-step process in which the first color resin and the second color resin are simultaneously injected into the mold. Accordingly, the thickness of the injection molded article can be easily adjusted through adjustment of the size of the mold.

In some embodiments, the injection molded article may have a thickness of about 0.05 cm or more, for example, about 0.05 cm to about 10 cm, specifically about 0.08 cm to about 8 cm. Here, the thickness of the injection molded article can be easily adjusted to fall within this range.

### [Mode for Invention]

Next, the present invention will be described in more detail with reference to examples. However, it should be noted that these examples are provided for illustration only and should not be construed in any way as limiting the invention.

### EXAMPLE

Details of each component used in Examples and Comparative Examples are as follows:

### (A) First color resin composition

A first color resin composition was prepared by mixing 0.5 parts by weight of a green pigment (a first colorant) with 100 parts by weight of an ABS resin (weight average molecular weight: 110,000 g/mol). The prepared first color resin composition had a transmittance of 75%, as measured on a 2.5 mm thick specimen in accordance with ASTM D1003.

### (B) Second color resin composition

A second color resin composition was prepared by mixing 0.6 parts by weight of a pink pigment (a second colorant) with 100 parts by weight of an ABS resin (weight average molecular weight: 110,000 g/mol). The prepared second color resin composition had a transmittance of 80%, as measured on a 2.5 mm thick specimen in accordance with ASTM D1003.

### Examples 1 to 4 and Comparative Examples 1 to 2: Manufacture of injection molded article having color gradation

The first color resin composition and the second color resin composition were simultaneously injected into a mold having a size of 20 cm×28 cm×0.25 cm through (longitudinal) opposite ends of the mold, respectively, under injection conditions, as shown in Table 1, followed by drying, thereby manufacturing an injection molded article having a color gradation. The horizontal length and thickness of each of a first color resin part, a second color resin part, and a gradation section of the manufactured injection molded article were measured using Vernier calipers. Results are shown in Table 1.

**Table 1**

| | | Example | | | | Comparative Example | |
|---|---|---|---|---|---|---|---|
| | | 1 | 2 | 3 | 4 | 1 | 2 |
| (A) First color resin | Injection rate (cc/sec) | 100 | 100 | 100 | 100 | 100 | 100 |
| | Packing pressure (MPa) | 0 | 0 | 0 | 0 | 100 | 100 |
| (B) Second color resin | Injection rate (cc/sec) | 100 | 100 | 40 | 100 | 100 | 40 |
| | Packing pressure (MPa) | 100 | 50 | 100 | 100 | 100 | 100 |
| Injection temperature (°C) | | 230 | 230 | 230 | 250 | 230 | 230 |
| (Horizontal) length of first color resin part (cm) | | 9 | 12 | 13 | 8 | 14 | 18 |
| (Horizontal) length of second color resin part (cm) | | 14 | 14 | 10 | 13 | 14 | 10 |
| (Horizontal) length of gradation section (cm) | | 5 | 2 | 5 | 7 | 0 | 0 |
| Thickness of injection molded article (cm) | | 0.25 | 0.25 | 0.25 | 0.25 | 0.25 | 0.25 |

From the results shown in Table 1, it can be seen that the injection molded articles according to the present invention could be easily adjustable in thickness through adjustment of the thickness of the mold and could allow formation of a gradation section and adjustment of lengths of the gradation section and first and second resin parts through adjustment of packing pressure and injection conditions upon simultaneous injection of the first color resin (composition) and the second color resin (composition).

Conversely, the injection molded articles of Comparative Examples 1 and 2, in which there was no difference in packing pressure between the first color resin (composition) and the second color resin (composition), failed to have a gradation section.

It should be understood that various modifications, changes, alterations, and equivalent embodiments can be made by those skilled in the art without departing from the spirit and scope of the present invention.

## Claims

1. An injection molded article comprising:
a first color resin part having a first thickness at one end and formed at the other end with a wedge-shaped core layer; and
a second color resin part having a second thickness at one end and formed at the other end with a shell layer surrounding the core layer,
wherein the shell layer surrounding the core layer has a color gradation due to the core layer therein, when viewed from upper and lower surfaces thereof.

2. The injection molded article according to claim 1, wherein the first color resin part and the second color resin part are integrally formed with each other.

3. The injection molded article according to claim 1, wherein the first color and the second color are distinguishable from each other when viewing the core layer and the shell layer from side surfaces thereof.

4. The injection molded article according to claim 1, wherein each of a first color resin forming the first color resin part and a second color resin forming the second color part is formed of a thermoplastic resin composition having a transmittance of about 20% to about 99%, as measured on a 2.5 mm thick specimen in accordance with ASTM D1003.

5. The injection molded article according to claim 1, wherein a difference in transmittance between the first color resin and the second color resin is less than or equal to about 30%, as measured on 2.5 mm thick specimens in accordance with ASTM D1003.

6. The injection molded article according to claim 1, wherein the first thickness is the same as the second thickness.

7. The injection molded article according to claim 1, wherein the first thickness is different from the second thickness.

8. The injection molded article according to claim 1, wherein the injection molded article has a thickness of about 0.05 cm to about 10 cm.

9. A method of manufacturing an injection molded article, comprising:
simultaneously injecting a first color resin and a second color resin into a mold from opposite sides of the mold, respectively,
wherein packing pressure applied to the first color resin is lower than packing pressure applied to the second color resin.

10. The method according to claim 9, wherein the packing pressure applied to the first color resin ranges from about 0 MPa to about 130 MPa, the packing pressure applied to the second color resin ranges from about 10 MPa to about 140 MPa, and a difference in packing pressure between to the first color resin and the second color resin ranges from about 10 MPa to about 130 MPa.

11. The method according to claim 9, wherein the first color resin and the second color resin are injected at a rate of about 10 cc/sec to about 150 cc/sec.

12. The method according to claim 9, wherein the first color resin and the second color resin are injected at a temperature of about 180°C to about 350°C.
